# EUROPÄISCHE PATENTANMELDUNG

(11) **EP 2 037 340 A1**
(43) Veröffentlichungstag der Anmeldung: **18.03.2009**
(21) Anmeldenummer: 07018127.6
(22) Anmeldetag: 14.09.2007
(51) Int. Cl.: G05B 19/042

(54) **System und Verfahren zum Überwachen einer Steuereinrichtung eines Sicherheitsschaltgeräts**

(71) Anmelder: SIEMENS AKTIENGESELLSCHAFT, 80333 München (DE)
(72) Erfinder: Koller, Josef, 93133 Burglengenfeld (DE)

(57) **Zusammenfassung**

Die Erfindung betrifft ein System bzw. ein Verfahren zur Steuerung eines elektronischen Sicherheitsschaltgeräts (9) mittels einer Steuereinrichtung (6) und ein Sicherheitsschaltgerät (9) mit einem Testmodul (10), welches durch eine Steuereinrichtung (6) steuerbar ist. Die Steuereinrichtung (6) ist durch einen Testprozess überprüfbar, wobei ein erstes Datenpaket zur Initialisierung eines Testprozesses durch das Testmodul (10) erzeugt und auf die Steuereinrichtung (6) übertragen wird, das erste Datenpaket durch die Steuereinrichtung (6) zur Generierung eines Testergebnisses ausgewertet wird, ein zweites Datenpaket zur Übermittlung des Testergebnisses durch die Steuereinrichtung (6) erzeugt und auf das Testmodul (10) übertragen wird, und das zweite Datenpaket derart erzeugt wird, dass das erste Datenpaket durch die Steuereinrichtung (6) nach einem vorgegebenen Algorithmus geändert und als zweites Datenpaket bereitgestellt wird.

## Beschreibung

Die Erfindung betrifft ein System bzw. ein Verfahren zur Steuerung eines elektronischen Sicherheitsschaltgeräts mittels einer Steuereinrichtung und ein Sicherheitsschaltgerät mit einem Testmodul, welches durch eine Steuereinrichtung steuerbar ist.

Sicherheitsschaltgeräte werden eingesetzt, wenn eine sichere und zuverlässige Abschaltung bei Gefahr gefordert ist. Häufig ist ein Sicherheitsschaltgerät durch ein Engineeringtool, insbesondere eine Steuereinrichtung, anzusteuern. Mit Hilfe einer Steuereinrichtung kann ein Anwender gezielt Signalzustände beeinflussen bzw. verändern und damit die am Sicherheitsschaltgerät angeschlossenen Aktoren bzw. Automatisierungsanlagen ansteuern. Solche Aktoren bzw. Anlagen sollten sich zu jedem Zeitpunkt in einem kontrollierten Zustand befinden, auch wenn die Steuereinrichtung nicht fehlersicher entwickelt worden ist. Ein Schutz auf solche Anlage ist derzeit aber nur unter einer sicheren Steuerung möglich, welche mit Hilfe von einem sicheren Engineeringtool (Steuereinrichtung), z.B. SIMATIC S7, erfolgt. Wenn das Sicherheitsschaltgerät in eine zu schützende Anlage eingebaut worden ist, ist es notwendig, dessen Funktion zu testen. Dazu wird eine Steuereinrichtung zum Steuern des Sicherheitsschaltgerätes verwendet. In diesem Fall kann das Sicherheitsschaltgerät bzw. die an ihm angeschlossenen Anlagen in Gefahr gelangen, wenn die Steuereinrichtung versagt und folglich ein falscher Befehl an das Sicherheitsschaltgerät erteilt wird. Deswegen ist es wünschwert, dass das Sicherheitsschaltgerät die Anlage stets in einem kontrollierten sicheren Zustand hält, auch wenn die Steuereinrichtung ausfällt, versagt oder ein Fehler im Testprozess auftritt.

Der Erfindung liegt die Aufgabe zu Grunde, eine sichere Steuerung für ein Sicherheitsschaltgerät zu gewährleisten.

Diese Aufgabe wird durch ein System mit den Merkmalen des Patentanspruchs 1, ein Sicherheitsschaltgerät mit den Merkmalen des Patentanspruchs 8 bzw. ein Verfahren mit den Merkmalen des Patentanspruchs 12 gelöst. Die abhängigen Ansprüche betreffen vorteilhafte Weiterbildungen und Ausgestaltungen der Erfindung.

Der Erfindung liegt die Erkenntnis zugrunde, die technischen Anlagen bzw. die elektronischen Geräte eines Automatisierungssystems vor einer unkontrollierten Steuerung zu schützen. Ein System wird somit zur Steuerung eines elektronischen Sicherheitsschaltgeräts mit einem Testmodul und einer Steuereinrichtung aufgebaut, wobei das Sicherheitsschaltgerät zum Schützen mindestens einer technischen Anlage vorgesehen ist. Die Steuereinrichtung, die in der Regel eine Verwendungssoftware enthält, kann durch einen Testprozess so getestet werden, dass
- ein erstes Datenpaket (Handshakecode) als eine Anfrage zur Initialisierung des Testprozesses durch das Testmodul erzeugt und auf die Steuereinrichtung übertragen wird,
- das erste Datenpaket durch die Steuereinrichtung zur Generierung eines Testergebnisses ausgewertet wird, und
- ein zweites Datenpaket zur Übermittlung des Testergebnisses durch die Steuereinrichtung erzeugt und auf das Testmodul übertragen wird, wobei
- das zweite Datenpaket derart erzeugt wird, dass das erste Datenpaket durch die Steuereinheit nach einem vorgegebenen Algorithmus geändert und als zweites Datenpaket bereitgestellt wird.

Da man überprüfen muss, ob das erste Datenpaket durch die Steuereinrichtung richtig geändert wurde, kann das Sicherheitsschaltgerät bei einem negativen Prüfergebnis in einem sicheren Zustand, z.B. einem "Aus-Zustand", schalten, um die am Sicherheitsschaltgerät angeschlossenen Anlagen schützen zu können. Die Steuerung des Sicherheitsschaltgeräts kann dann durch dieses System auch mit einer nicht sicheren Steuereinrichtung vorab getestet werden, was zu kürzeren Entwicklungszeiten und damit zu geringeren Kosten führen kann.

Gemäß einer vorteilhaften Ausgestaltung der Erfindung wird ein Anfragesignal zur Anforderung an das erste Datenpaket durch die Steuereinrichtung erzeugt und auf das Testmodul übertragen. Das von der Steuereinrichtung vorausgehende "Anfordern des Handshakecodes" ist nur erforderlich, wenn es sich bei der Kommunikationsverbindung zwischen der Steuereinrichtung und dem Testmodul um ein Master-/Slave-Prinzip handelt, d.h. nur der Master, hier die Steuereinrichtung, kann einen Datenaustausch anstoßen. Bei einer Multimaster-Schnittstelle kann das Testmodul ohne vorherige Anforderung einen Handshakecode an die Steuereinrichtung senden. Wenn der Handshakecode zuerst von der Steuereinrichtung beim Testmodul angefordert werden muss, überwacht das Testmodul die zeitlichen Abstände zwischen den Anforderungen. Wird eine bestimmte Zeit z.B. wegen Durchtrennung eines Verbindungskabels überschritten, so schaltet das Sicherheitsschaltgerät ebenfalls in den sicheren Zustand.

Gemäß einer vorteilhaften Ausgestaltung der Erfindung wird das Testergebnis durch das Testmodul derart ermittelt, dass das zweite Datenpaket mit dem gesandten ersten Datenpaket verglichen wird, wobei der Unterschied zwischen dem ersten und dem zweiten Datenpaket zur Überprüfung der Steuereinrichtung ausgewertet wird. Zum Beispiel kann der Unterschied mit einem entsprechenden Sollwert, der vorgegeben bzw. im Testmodul gespeichert ist, verglichen werden. Damit kann festgestellt werden, ob diese Steuereinrichtung richtig arbeitet oder nicht.

Gemäß einer vorteilhaften Ausgestaltung der Erfindung wird das Testergebnis durch das Testmodul derart ermittelt, dass das zweite Datenpaket und/oder das Anfragesignal zeitabhängig ausgewertet werden. Es wird bspw. geprüft, ob der Zeitabstand zu der Sendung des letzten ersten Datenpakets innerhalb einer bestimmten Zeit erfolgt ist. Damit kann die Verbindung, die Datenübertragung bzw. die Datenverarbeitungsfähigkeit der Steuereinrichtung ebenfalls überprüft werden.

Gemäß einer weiteren vorteilhaften Ausgestaltung der Erfindung wird mindestens eine Schnittstelle zum Senden und/oder Empfang des Anfragesignals, des ersten und zweiten Datenpakets vorgesehen. Somit können Datenpakete einerseits in einem für Übertragung geeigneten Datenformat, z.B. modulierte Hochfrequenzsignale, übertragen und andererseits zwischen unterschiedlichen Datenformaten umformatiert und verarbeitet werden.

Gemäß einer weiteren vorteilhaften Ausgestaltung der Erfindung kann das Sicherheitsschaltgerät durch das Testmodul anhand des Testergebnisses gesteuert werden. Damit wird das Sicherheitsschaltgerät bei einem negativen Prüfergebnis in einen sicheren Zustand umgeschaltet, um die an seinen Ausgängen angeschlossenen Anlage schützen zu können.

Vorteilhafterweise wird das Testmodul in das Sicherheitsschaltgerät integriert, damit das Sicherheitsschaltgerät durch das Testmodul zuverlässiger gesteuert werden kann. Eine für Störungen anfällige Datenübertragung zwischen dem Sicherheitsschaltgerät und dem Testmodul kann gespart werden.

Weiterhin wird ein Sicherheitsschaltgerät, welches durch eine Steuereinrichtung steuerbar ist, mit einem Testmodul vorgesehen, wobei das Testmodul zur Überprüfung der Steuereinrichtung vorgesehen und derart ausgebildet ist, dass
- das Testmodul zur Erzeugung eines ersten Datenpaketes vorgesehen ist, wobei das erzeugte erste Datenpaket zur Initialisierung eines Testprozesses auf die Steuereinrichtung (6) übertragbar ist,
- das Testmodul zum Empfang eines von der Steuereinrichtung erzeugbaren zweiten Datenpaketes vorgesehen ist, wobei das zweite Datenpaket ein Testergebnis des Testprozesses übermittelt,
- das Testmodul zur Ermittelung des Testergebnisses durch Vergleich des ersten mit dem zweiten Datenpaket vorgesehen ist, und
- das Testmodul zur Überprüfung der Steuereinrichtung auf Basis des Unterschieds zwischen dem ersten und dem zweiten Datenpaket vorgesehen ist.

Außerdem wird ein Verfahren zur Steuerung eines elektronischen Sicherheitsschaltgeräts mittels einer Steuereinrichtung vorgestellt, wobei die Steuereinrichtung durch einen Testprozess überwacht wird. Bei dem Testprozess erfolgt:
- ein erstes Datenpaket zur Initialisierung des Testprozesses durch ein Testmodul erzeugt und auf die Steuereinrichtung übertragen wird,
- das erste Datenpaket durch die Steuereinrichtung zur Generierung eines Testergebnisses ausgewertet wird,
- ein zweites Datenpaket wird zur Übermittlung des Testergebnisses durch die Steuereinrichtung erzeugt und auf das Testmodul übertragen, und
- das zweite Datenpaket derart erzeugt wird, dass das erste Datenpaket durch die Steuereinheit nach einem vorgegebenen Algorithmus geändert und als das zweite Datenpaket bereitgestellt wird.

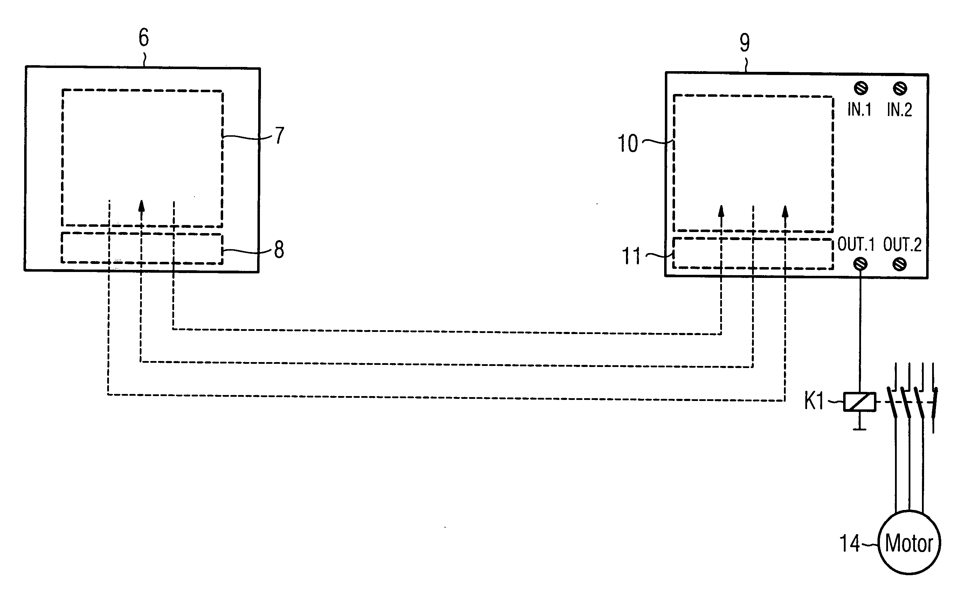

Die Erfindung wird im Folgenden im Rahmen eines Ausführungsbeispiels anhand der Figur näher dargestellt. Es zeigt:
FIG eine Darstellung eines erfindungsgemäßen Systems zur Steuerung eines elektronischen Sicherheitsschaltgeräts.

Diese Figur zeigt ein System, das zur Steuerung eines elektronischen Sicherheitsschaltgeräts 9 mit einem Testmodul 10 und einer Steuereinrichtung 6 aufgebaut ist, wobei das Testmodul 10 in dem Sicherheitsschaltgerät 9 integriert ist. Das Sicherheitsschaltgerät 9 ist zum Schützen einer technischen Anlage (Motor) 14 vorgesehen, wobei die Anlage 14 an dem Ausgang des Sicherheitsschaltgerätes 9 angeschlossen ist. Bei dieser Steuereinrichtung 6 kann ein Applikationsprogramm 7 zur Steuerung des Sicherheitsschaltgerät 9 verwendet werden. Die Steuereinrichtung 6 und das Sicherheitsschaltgerät umfassen jeweils eine Schnittstelle 8 und 11 zum Senden und Empfang von Datenpaketen, damit Daten zwischen der Steuereinrichtung 6 und dem Sicherheitsschaltgerät 9 übertragen und vorzugsweise drahtlos übermittelt werden können. Um das Sicherheitsschaltgerät 9 durch die Steuereinrichtung 6 sicher steuern und damit den an ihm angeschlossenen Motor 14 schützen zu können, muss diese Steuereinrichtung 6 bzw. das Applikationsprogramm 7 fehlerfrei funktionieren. Wenn die Steuereinrichtung 6 bzw. das Applikationsprogramm 7 nicht fertig entwickelt sind oder nicht mehr funktionieren, müssen sie vor ihrem Einsatz gestestet werden.

Ein Testprozess erfolgt mit folgenden Schritten:
- ein Anfragesignal wird zur Initialisierung des Testprozesses durch die Steuereinrichtung 6 erzeugt und auf das Testmodul 10 übertragen,
- auf Anforderung des Anfragesignals wird ein erstes Datenpaket (Handshakecode) durch das Testmodul 10 erzeugt und der Steuereinrichtung 6 übertragen,
- das erste Datenpaket wird durch die Steuereinrichtung 6 zur Generierung eines Testergebnisses ausgewertet,
- ein zweites Datenpaket wird zur Übermittlung des Testergebnisses durch die Steuereinrichtung 6 erzeugt und auf das Testmodul 10 übertragen, wobei das zweite Datenpaket derart erzeugt wird, dass das erste Datenpaket durch die Steuereinheit 6 nach einem vorgegebenen Algorithmus geändert und als das zweite Datenpaket bereitgestellt wird, und
- das Testergebnis durch das Testmodul 10 so ermittelt wird, dass das zweite Datenpaket sowohl mit dem gesandten ersten Datenpaket verglichen als auch zeitabhängig ausgewertet wird.

Dabei wird der Unterschied zwischen dem ersten und dem zweiten Datenpaket ausgewertet bzw. mit einem entsprechenden Sollwert verglichen. Der Sollwert kann von dem Anwender vorgegeben bzw. in das Testmodul 10 gespeichert werden. Zudem wird auch überprüft, ob der Zeitabstand zu der Sendung des letzten ersten Datenpakets innerhalb einer bestimmten Zeit erfolgt ist. Bei Unterbrechung der Verbindung zwischen der Steuereinrichtung 6 und dem Sicherheitsschaltgerät 9 kann vom Sicherheitsschaltgerät 9 ebenfalls ein sicherer Zustand für den Motor 14 eingenommen werden. Stellt das Sicherheitsschaltgerät 9 bei Überprüfung fest, dass die Steuereinrichtung 6 nicht mehr korrekt arbeitet oder nicht mehr antwortet, so schaltet das Sicherheitsschaltgerät 9 seinen Ausgang und den daran angeschlossenen Motor 14 in den "sicheren Zustand", in der Regel ein Aus-Zustand.

Dadurch, dass überprüft wird, ob das erste Datenpaket richtig geändert wurde, kann das Sicherheitsschaltgerät 9 bei einem negativen Prüfergebnis in einen sicheren Zustand schalten, um die am Sicherheitsschaltgerät 9 angeschlossenen Anlagen 14 zu schützen. Die Steuerung des Sicherheitsschaltgeräts kann durch dieses System mit einer nicht sicheren Steuereinrichtung 6 entwickelt werden, was zu kürzeren Entwicklungszeiten und damit zu geringeren Kosten führen kann.

## Patentansprüche

1. System zur Steuerung eines elektronischen Sicherheitsschaltgeräts (9) mit einem Testmodul (10) und einer Steuereinrichtung (6), welche durch einen Testprozess überprüfbar ist, wobei
- ein Testmodul (10) zur Erzeugung eines ersten Datenpakets vorgesehen ist,
- der Testprozess durch Übertragung des ersten Datenpakets auf die Steuereinrichtung (6) initialisierbar ist,
- das erste Datenpaket durch die Steuereinrichtung (6) zur Generierung eines Testergebnisses auswertbar ist,
- ein zweites Datenpaket zur Übermittlung des Testergebnisses durch die Steuereinrichtung (6) erzeugbar und auf das Testmodul (10) übertragbar ist und
- das zweite Datenpaket derart erzeugbar ist, dass das erste Datenpaket durch die Steuereinheit (6) nach einem vorgegebenen Algorithmus geändert und als zweites Datenpaket bereitgestellt wird.

2. System nach Anspruch 1, wobei ein Anfragesignal zur Anforderung an das erste Datenpaket durch die Steuereinrichtung (6) erzeugbar und auf das Testmodul (10) übertragbar ist.

3. System nach Anspruch 1 oder 2, wobei das Testmodul (10) zur Ermittlung des Testergebnisses durch Vergleich des ersten mit dem zweiten Datenpaket vorgesehen ist, und wobei das Testmodul (10) zur Überprüfung der Steuereinrichtung (6) auf Basis des Unterschieds zwischen dem ersten und dem zweiten Datenpaket vorgesehen ist.

4. System nach einem der Ansprüche 1 bis 3, wobei für die Ermittelung des Testergebnisses durch das Testmodul (10) eine vordefinierte oder vorgebbare Höchstzeit vorgesehen ist.

5. System nach einem der vorherigen Ansprüche, wobei mindestens eine Schnittstelle (8,11) zum Senden und/oder Empfang des Anfragesignals und der Datenpakete vorgesehen ist.

6. System nach einem der vorherigen Ansprüche, wobei das Sicherheitsschaltgerät (9) durch das Testmodul (10) nach dem Testergebnis steuerbar ist.

7. System nach einem der vorherigen Ansprüche, wobei das Testmodul (10) in das Sicherheitsschaltgerät (9) integrierbar ist.

8. Sicherheitsschalgerät (9), welches durch eine Steuereinrichtung (6) steuerbar ist, mit einem Testmodul (10), wobei
- das Testmodul (10) zur Überprüfung der Steuereinrichtung (6) vorgesehen und derart ausgebildet ist, dass
- das Testmodul (10) zur Erzeugung eines ersten Datenpakets vorgesehen ist, wobei das erste Datenpaket zur Initialisierung eines Testprozesses auf die Steuereinrichtung (6) übersendbar ist,
- das Testmodul (10) zum Empfang eines von der Steuereinrichtung (6) erzeugbaren zweiten Datenpakets vorgesehen ist, wobei das zweite Datenpaket ein Testergebnis des Testprozesses übermittelt,
- das Testmodul (10) zur Ermittlung des Testergebnisses durch Vergleich des ersten mit dem zweiten Datenpaket vorgesehen ist, und
- das Testmodul (10) zur Überprüfung der Steuereinrichtung (6) auf Basis des Unterschieds zwischen dem ersten und dem zweiten Datenpaket vorgesehen ist.

9. Sicherheitsschaltgerät (9) nach Anspruch 8, wobei das Testmodul (10) zur Quittierung eines von der Steuereinrichtung (6) übersandten Anfragesignals vorgesehen ist, wobei das Anfragesignal das erste Datenpaket anfordert.

10. Sicherheitsschaltgerät (9) nach Anspruch 8 oder 9, wobei das Testergebnis durch das Testmodul (10) derart ermittelbar ist, dass das zweite Datenpaket und/oder das Anfragesignal zeitabhängig auswertbar sind.

11. Sicherheitsschaltgerät (9) nach einem der Ansprüche 8 bis 10, wobei das Sicherheitsschaltgerät (9) mindestens eine Schnittstelle (8,11) zum Senden und/oder Empfang von Datenpaketen und des Anfragesignals aufweist.

12. Sicherheitsschaltgerät (9) nach einem der vorherigen Ansprüche 8 bis 11, wobei das Sicherheitsschaltgerät (9) durch das Testmodul (10) anhand des Testergebnisses steuerbar ist.

13. Verfahren zur Steuerung eines elektronischen Sicherheitsschaltgeräts (9) mittels einer Steuereinrichtung (6), wobei die Steuereinrichtung (6) durch einen Testprozess überprüft wird, während des Testprozesses
- ein erstes Datenpaket zur Initialisierung des Testprozesses durch ein Testmodul (10) erzeugt und auf die Steuereinrichtung (6) übertragen wird,
- das erste Datenpaket durch die Steuereinrichtung (6) zur Generierung eines Testergebnisses ausgewertet wird,
- ein zweites Datenpaket zur Übermittlung des Testergebnisses durch die Steuereinrichtung (6) erzeugt und auf das Testmodul (10) übertragen wird und
- das zweite Datenpaket derart erzeugt wird, dass das erste Datenpaket durch die Steuereinheit (6) nach einem vorgegebenen Algorithmus geändert und als das zweite Datenpaket bereitgestellt wird.

14. Verfahren nach Anspruch 13, wobei ein Anfragesignal zur Anforderung an das erste Datenpaket durch die Steuereinrichtung (6) erzeugt und auf das Testmodul (10) übertragen wird.

15. Verfahren nach Anspruch 13 oder 14, wobei das Testergebnis durch das Testmodul (10) derart ermittelt wird, dass das zweite Datenpaket mit dem ersten Datenpaket verglichen wird, wobei der Unterschied zwischen dem ersten und dem zweiten Datenpaket zur Überprüfung der Steuereinrichtung (6) ausgewertet wird.

16. Verfahren nach einem der Ansprüche 13 bis 15, wobei für die Ermittelung des Testergebnisses durch das Testmodul (10) eine Höchstzeit vordefiniert oder vorgegeben wird.

17. Verfahren nach einem der vorherigen Ansprüche 13 bis 16, wobei das Sicherheitsschaltgerät (9) durch das Testmodul (10) nach dem Testergebnis gesteuert wird.
